# EUROPÄISCHE PATENTSCHRIFT

(11) **EP 4 126 443 B1**
(45) Veröffentlichungstag und Bekanntmachung des Hinweises auf die Patenterteilung: **13.05.2026**
(21) Anmeldenummer: 21717757.5
(22) Anmeldetag: 17.03.2021
(51) Int. Cl.: B23K 26/352, B23K 26/0622, B23K 26/06, B23K 101/04, B23K 101/34, B23K 103/04, B21B 27/00

(54) **VERFAHREN ZUR OBERFLÄCHENTEXTURIERUNG EINER DRESSIERWALZE**
METHOD FOR SURFACE TEXTURING OF A DRESSING ROLLER
PROCÉDÉ DE TEXTURATION SUPERFICIELLE D'UN CYLINDRE DE DRESSAGE

(30) Priorität: 23.03.2020 DE 102020107858
(43) Veröffentlichungstag der Anmeldung: 08.02.2023
(73) Patentinhaber: ThyssenKrupp Steel Europe AG, 47166 Duisburg (DE)
(72) Erfinder: VOGT, Oliver, 44319 Dortmund (DE); JUNGE, Fabian, 46485 Wesel (DE); CETINKAYA, Burak William, 44139 Dortmund (DE)
(74) Vertreter: ThyssenKrupp Steel Europe AG
(86) Internationale Anmeldenummer: PCT/DE2021/100267
(87) Internationale Veröffentlichungsnummer: WO 2021/190700

(56) Entgegenhaltungen:
- EP-A1- 2 689 883
- EP-A2- 0 472 049
- DE-A1- 102012 017 703
- DE-A1- 19 503 951
- DE-B3- 102012 205 702
- JP-A- H06 114 405
- US-A1- 2006 163 222

## Beschreibung

Die Erfindung betrifft ein Verfahren zur Oberflächentexturierung einer Dressierwalze zum Dressieren eines metallischen Blechs entsprechend dem Oberbegriff des Anspruchs 1 (siehe z.B. DE 10 2012 017703 A1).

Bei der Herstellung von metallischen Blechen, beispielsweise Stahlblechen, insbesondere aus Stahlband hergestellten Stahlblechen, ist in vielen Anwendungsgebieten eine gezielte Einstellung der Oberflächentopografie von Relevanz.

Aus der Praxis ist bekannt, für das gezielte Einstellen von Oberflächentopografien ein Dressieren des Blechs vorzunehmen. Um eine möglichst wunschgemäße Oberflächentopografie des dressierten Blechs zu erhalten, wird unter anderem eine spezifische Texturierung der Oberfläche der Dressierwalzen hergestellt. Es wird also die Mantelfläche der Dressierwalze, welche mit dem Blech, beispielsweise dem Stahlband, in Kontakt kommt, mit einer bestimmten Oberflächentextur versehen.

Damit die Oberflächentopografie eines Blechs, beispielsweise aus einem Stahlband hergestellt, höchsten Ansprüchen genügen kann, ist folgerichtig die vorgesehene Oberflächentextur der Dressierwalze möglichst genau und reproduzierbar herzustellen.

Eine typische Vorgehensweise ist die Bereitstellung einer Dressierwalze, deren Mantelfläche sodann einer gezielten Strukturierung unterzogen wird.

Eine bekannte Gruppe von Verfahren zur Strukturierung einer Walzenoberfläche, genauer und im Rahmen der vorliegenden Erfindung äquivalent: Walzenmantelfläche, umfasst Verfahren zur Strukturierung mittels gepulsten Lasers. Beispielsweise ist bekannt, einen Materialabtrag auf der Oberfläche einer Dressierwalze mittels gepulsten Lasers, bevorzugt Kurzpuls- oder Ultrakurzpulslasers, herbeizuführen. Bei Verfahren dieser Art wird ein Muster auf der Walzenoberfläche erzeugt, indem Laserpulse eines gepulsten Lasers auf die Walzenoberfläche gerichtet werden und am Auftreffpunkt ein vorübergehendes Aufschmelzen des an der Oberfläche vorhandenen Materials herbeigeführt wird. Ein Teil des aufgeschmolzenen Materials verdampft, der nicht verdampfte Teil erstarrt wieder.

In der EP 2 892 663 B1 wird beschrieben, dass auf einer Walze eine deterministische Oberflächenstruktur, das bedeutet insbesondere keine stochastische Oberflächenstruktur, mit Vertiefungen gebildet wird, wobei die Vertiefungen eine Vielzahl von sich überlappenden Näpfchen aufweist, die beispielsweise so angeordnet sind, dass sie eine doppel-I-förmige, H-förmige, kreuzförmige, C-förmige oder X-förmige Materialstruktur in der Walzenoberfläche begrenzen.

Vor dem Hintergrund der stetig wachsenden Anforderungen an die Homogenität der Bandoberfläche und die Reproduzierbarkeit und Gleichförmigkeit der Rauheitskennwerte verbunden mit einer möglichst hohen Sauberkeit stellt sich die Aufgabe, ein gegenüber bekannten Verfahren weiterentwickeltes Verfahren bereitzustellen, mit welchem verbesserte Oberflächeneigenschaften der dressierten Bleche ermöglicht werden.

Des Weiteren ist ein gattungsgemäßes Verfahren zum Texturieren beispielhaft in der EP 2 689 883 A1 beschrieben.

Die Aufgabe wird gelöst mit einem Verfahren zur Oberflächentexturierung einer Dressierwalze mit den Merkmalen des Anspruchs 1.

Die Erfindung betrifft ein Verfahren zur Oberflächentexturierung einer Dressierwalze. Insbesondere sind Dressierwalzen zum Dressieren eines metallischen Blechs betroffen. Als metallisches Blech kann insbesondere ein Stahlband vorgesehen sein. Das Verfahren sieht zunächst vor, dass eine Dressierwalze bereitgestellt wird und mittels Laserpulsen eines gepulsten Lasers ein Muster auf der Walzenoberfläche erzeugt wird.

Die Mantelfläche einer Dressierwalze besteht beispielsweise aus einem Stahl. Die Walze ist beispielsweise zumindest an ihrer Mantelfläche, vorzugsweise vollständig, aus einem Stahlwerkstoff hergestellt, vorzugsweise aus einem klassischen Kaltwalzenstahl mit einem Chromgehalt von bis zu 3 %.

Es ist vorgesehen, dass ein Muster auf der Walzenoberfläche erzeugt wird. Zum Erzeugen des Musters werden Laserpulse eines gepulsten Lasers eingesetzt.

Als gepulster Laser kann insbesondere ein Kurzpulslaser, bevorzugt ein Ultrakurzpulslaser, genutzt werden. Der Begriff der Kurzpulslaser bezeichnet einen gepulsten Laser mit Pulslängen im Nanosekundenbereich mit Pulsbereiten von > 100 Pikosekunden. Der Begriff des Ultrakurzpulslasers bezeichnet einen gepulsten Laser mit Pulsdauern von weniger als 100 Pikosekunden.

Als geeigneter Ultrakurzpulslaser ist beispielsweise ein Kurzpulslaser vorgesehen, der eine Pulswiederholfrequenz zwischen 10 kHz und 2,5 Mhz und/oder eine Wellenlänge zwischen 930 und 1090 nm, bevorzugt mit einer Pulsdauer zwischen 0,4 ps bis 100 µs, besonders bevorzugt 1 ps bis 10 µs aufweist.

Beispielsweise kann vorgesehen sein, dass der gepulste Laser eine mittlere Leistung hat, die zwischen 10 bis 150 Watt, insbesondere zwischen 15 bis 100 Watt, besonders vorzugsweise zwischen 20 bis 70 Watt liegt.

Mit dem gepulsten Laser wird das gewünschte Muster auf der Walzenoberfläche erzeugt. Erfindungsgemäß ist vorgesehen, dass dies erfolgt, indem eine Sequenz von Laserpulsen auf die Walzenoberfläche gerichtet wird. Die Sequenz von Laserpulsen umfasst aufeinander folgende, einander überlappende Pulse. Aufgrund des Überlapps aufeinander folgender Pulse wird eine Sequenz von näpfchenförmigen Vertiefungen gebildet, die ebenfalls einander überlappen. Es ist erfindungsgemäß vorgesehen, dass zwei aufeinanderfolgende einander überlappende Laserpulse einen Pulsabstand aufweisen, der zwischen 0,75 und 1,25 von einem Pulsradius beträgt.

Das Richten einer Sequenz von Laserpulsen auf die Walzenoberfläche ist im Rahmen dieser Erfindung dahingehend zu verstehen, dass aufeinanderfolgende, das heißt: zeitlich aufeinanderfolgende, Pulse an veränderten Positionen der Walzenoberfläche hintereinander, das heißt: räumlich hintereinander, auftreffen sollen, das heißt: die einander unmittelbar (zeitlich) nachfolgenden Laserpulse treffen an unterschiedlichen Positionen der Walzenoberfläche auf, wobei bevorzugt vorgesehen ist, dass zwei (zeitlich) hintereinander aufeinander folgende Laserpulse einander benachbart sind sowie einander überlappen. Erfindungsgemäß überlappen die zwei aufeinanderfolgenden Laserpulse mit einem Pulsabstand, der zwischen 0,75 und 1,25 von einem Pulsradius beträgt.

Es hat sich nämlich gezeigt, dass ein zu großer Pulsabstand zweier aufeinander folgender Laserpulse dazu führt, dass zwei aufeinander folgende näpfchenförmige Vertiefungen gebildet werden, die nicht ineinander übergehen, sondern von einer Barriere aus Walzenmaterial voneinander getrennt werden, was negative Auswirkungen auf die Walzentopografie hat. Ein zu geringer Pulsabstand hingegen führt zu einem sehr glatt strukturierten zusammenhängenden Graben, gebildet aus den näpfchenförmigen Vertiefungsbereichen. Ein sehr glatt strukturierter Graben, der das Muster bildet, bewirkt zwar gute Ergebnisse bei einem Dressieren, seine Herstellung ist jedoch aufgrund des nur geringen Vortriebs des Laserstrahls zeitaufwendiger und infolgedessen nicht sehr wirtschaftlich.

Zur erfindungsgemäßen Herstellung der Oberflächentexturierung der Dressierwalze kann beispielsweise vorgesehen sein, dass der gepulste Laser, der Kurzpuls- oder der Ultrakurzpulslaser, ortsfest und nicht bewegt auf die Oberfläche der Walze orientiert ist und die zu gravierende Walze in einer Drehrichtung rotiert. Während des Drehens ist gleichzeitig möglich, mit einer Fokussieroptik eine transversal in Walzenachsrichtung bewegende Führung des Laserstrahls herbeizuführen, so dass sich eine helixförmige Bahn des Laserstrahls auf der Walzenoberfläche ergibt. Die Herstellung einer deterministischen Struktur wird herbeigeführt, indem eine schnelle kontinuierliche Folge von Laserpulsen gezielt unterbrochen oder in ihrer Pulsenergie verändert wird. Eine derartige Unterbrechung kann mittels schnellen optischen Schalters, einem AOM realisiert werden. Eine entsprechende Vorgehensweise ist in dem eingangs genannten Dokument beschrieben.

Alternativ ist auch möglich, dass eine Bewegung der Walze, sowohl rotatorisch als auch transversal in Richtung der Drehachse sowie eine Richtung des Laserstrahls auf die Walzenoberfläche auf andere Weise relativ zueinander gesteuert wird. Wesentlich ist, dass anhand für den Fachmann unproblematisch realisierbarer Maßnahmen der Laserstrahl in einer Folge einander überlappender Strahlen vorgetrieben wird und zur gezielten Herbeiführung eines Musters auf der Walzenoberfläche gezielt eine Unterbrechung des Laseremittierens (gegebenenfalls durch Umleiten des Strahlengangs mittels eines Spiegels) oder eine Veränderung der Pulsenergie, bevorzugt einer Reduzierung der Pulsenergie, eingestellt wird.

Um die Bildung des sich wiederholenden Musters herbeizuführen, wird erfindungsgemäß die Sequenz von Laserpulsen in einer Weiterbildung gezielt unterbrochen oder in ihrer Pulsenergie verändert. Das bedeutet, dass sequenziell aufeinanderfolgende einander überlappende Laserpulse auf der Walze aufgebracht werden und diese Folge von Laserpulsen bei gleichbleibenden sonstigen Parametern, insbesondere Pulsfolgefrequenz, gegebenenfalls Walzendrehzahl und/oder Vorschubgeschwindigkeit der Axialachse der Fokussieroptik, an vorgegebenen Positionen entweder unterbrochen wird, so dass an einer eigentlich zum Auftreffen eines Laserpulses vorgesehenen Position kein Laserpuls auftritt, oder aber eine Veränderung der Pulsenergie stattfindet, so dass die Bildung des Musters erreicht wird. Beispielsweise kann vorgesehen sein, dass die Laserpulse des gepulsten Lasers zum Erzeugen des Musters mit einer ersten Laserpulsenergie stattfindet und zum Begrenzen des Musters die Pulsenergie einen zweiten Wert einnimmt. Insbesondere kann vorgesehen sein, dass die Sequenz von Laserpulsen für die Bildung eines sich deterministisch wiederholenden Musters eingestellt wird, das heißt, dass das Muster in regelmäßiger und gleichmäßiger Folge immer wieder auf der Oberfläche vorhanden ist, beispielsweise angeordnet nach dem Anordnungsprinzip eines Schachbrettmusters nämlich mit einem quadratischen Muster, das wiederholt alternierend in 0 Grad Drehung und benachbart in 90 Grad Drehung angeordnet ist.

Bevorzugt nimmt zumindest in einem Bereich des Musters, das heißt in einem Bereich der von dem Laser zu strukturierenden Walzenmantelfläche, bevorzugt in der gesamten Fläche des Musters, besonders bevorzugt auf der gesamten Walzenmantelfläche, jedes Paar zweier sequenziell aufeinander folgender überlappender Laserpulse einen selben Pulsabstand ein. Das bedeutet, dass der Pulsabstand nicht nur für zwei aufeinander folgende Pulse die eingangs definierte Anforderung aufweist, sondern außerdem die Anforderung aufweist, dass der Pulsabstand für sämtliche einander überlappende Pulse identisch ist.

Das einzustellende deterministische Muster kann beispielsweise als Doppel-I-förmiges, als H-förmiges, kreuzförmiges, C-förmiges oder X-förmiges Materialstruktur begrenzendes Muster vorgesehen sein. Besonders bevorzugt erfolgt das gezielte Verändern der Pulsenergie der Sequenz von Laserpulsen derart, dass von dem Muster begrenzte Materialstrukturen mit einer Musterpulsenergie beaufschlagt werden, welche das definierte Muster herbeiführen und die von dem Muster begrenzte Materialstruktur mit einer Sequenz von Glättungslaserpulsen beaufschlagt wird mit einer Glättungspulslaserenergie, die geringer ist als die Musterpulsenergie. Das bedeutet mit anderen Worten, dass anders, als in der eingangs genannten Druckschrift, nicht etwa durch das deterministisch wiederholende Muster Materialstrukturen begrenzt werden, welche unbearbeitet bleiben beziehungsweise nicht von überlappenden Laserpulsen beaufschlagt sind; sondern dass auch in die von dem Muster begrenzten Materialstrukturen einer Bearbeitung mit den Ultrakurzpuls- oder Kurzpulslaserpulsen unterzogen werden. Beispielsweise sind die Materialstrukturen in der Walzenoberfläche, welche beispielsweise Doppel-I-förmig, H-förmig, kreuzförmig, C-förmig oder X-förmig ausgebildet sein können, in diesem Fall ebenfalls mit sequenziell in der begrenzten Materialstruktur auftreffenden Laserpulsen bearbeitet, wobei die Laserpulse hinsichtlich ihres Pulsabstands dieselben Bedingungen aufweisen wie sie eingangs für das Muster herstellende Pulse definiert sind, sich von diesen aber in der Glättungslaserpulsenergie unterscheiden. Besonders bevorzugt ist vorgesehen, dass die Glättungslaserpulsenergie 60 Prozent oder weniger der Musterpulsenergie beträgt.

Beispielsweise kann die Pulsenergie eines Musterpulses zwischen 0,1 und 1,0 mJ sein und die Pulsenergie eines Glättungspulses weniger als 60 % dieses Werts, beispielsweise 50 Prozent dieses Werts oder weniger, sein.

Insbesondere kann vorgesehen sein, dass ein gesamter Dressierbereich der Dressierwalze, bevorzugt die gesamte Mantelfläche der Dressierwalze, sequenziell mit einander überlappenden Pulsen bearbeitet wird. Das schließt ein, dass der gesamte Bereich entweder für das Herstellen des Musters mit einem Laserpuls beaufschlagt wird oder als von dem Muster zu begrenzender Bereich, das heißt: als Materialstruktur, mit einem Glättungspuls beaufschlagt wird. Besonders bevorzugt wird dies derart vorgenommen, dass sowohl in einer Umfangsrichtung der Walze auch in eine Axialrichtung der Walze alle benachbarten Pulse einander überlappen, das bedeutet, dass insbesondere jeder Musterpuls mit mindestens vier, bevorzugt genau 4, Pulsen in Überlapp gebracht wird, die jeweils einander ein Musterpuls oder ein Glättungspuls sind. Da die Pulse näherungsweise kreisförmig sind, sind kleine Bereiche ohne unmittelbare Laserpulsbeaufschlagung denkbar, vielmehr ist die beschriebene Vorgehensweise so zu verstehen, dass kein Bereich unbeaufschlagt bleibt, der eine so große Fläche aufweist, die den Querschnitt des Pulses ohne Schnitt mit einem Nachbarpuls aufnehmen kann.

Die bevorzugte sequenzielle Bildung des Musters und der Glättung der Materialstrukturen umfasst insbesondere, dass alle Pulse, das heißt sowohl die Musterpulse als auch die Glättungslaserpulse, sequenziell erzeugt werden, das heißt, der Laserstrahl wird sequentiell von Position zu Position über den zu strukturierenden Bereich des Walzenmantels bewegt und es wird an jeder Position der Sequenz ein Puls aufgebracht, der entweder ein Musterpuls oder ein in der Energie geänderter Glättungslaserpuls ist, bis die Strukturierung beendet ist. Das heißt: Es wird bevorzugt nicht zuerst eine erste Sequenz von Musterpulsen und eine zweite Sequenz von Glättungspulsen aufgebracht, sondern es wird nur eine Sequenz von Pulsen aufgebracht, in welcher alle jeweils zwei benachbarten Pulse einander überlappen und je nach Position des Pulses die Pulsenergie als Musterpulsenergie gehalten wird zum Bilden des Musters oder die Pulsenergie reduziert wird zum Glätten der begrenzten Materialstruktur.

Der gemäß Weiterbildung der Erfindung gewünschte Überlapp der Pulse kann beispielsweise erreicht werden, indem sowohl ein Überlapp in Umfangsrichtung der Walze als auch ein Überlapp in Axialrichtung der Walze stets mit der eingangs genannten Forderung des Pulsabstands zwischen 0,75 und 1,25 von einem Pulsradius eingestellt wird ungeachtet der Tatsache, ob der Puls ein Glättungslaserpuls oder ein Musterpuls ist. Dabei wird durch die Musterpulse eine Materialstruktur herbeigeführt, die ein Muster aufweist, beispielsweise eines der oben genannten wie Doppel-I-förmig, H-förmig usw., und die begrenzte Struktur, ebenfalls sowohl in Axialrichtung als auch in Umfangrichtung zu allen benachbarten Pulsen überlappen und lediglich sich durch die Energie, nämlich bei der Bearbeitung der begrenzten Materialstrukturen, durch eine weniger Energie aufweisende Glättungspulsenergie unterscheidet.

Es kann vorgesehen sein, dass die näpfchenförmigen Vertiefungen zwischen 6 µm und 14 µm tief sind und/oder die näpfchenförmigen Vertiefungen zwischen 20 µm und 80 µm Durchmesser aufweisen.

Ein Gedanke betrifft eine Dressierwalze, die mit einem der eingangs genannten Verfahren hergestellt ist.

Insbesondere ist ein dressiertes Stahlblech vorgesehen, das aus einem Kaltband oder einem Warmband aus einem Stahl, beispielsweise einem Stahl für Außenhautanwendungen im Fahrzeugbau, mittels Dressierens mit einer Dressierwalze wie oben beschrieben erzeugt wird.

Es hat sich gezeigt, dass durch das erfindungsgemäße Verändern der Pulsenergie während des Texturierens der Walzenmantelfläche erreicht wird, dass bestehende Topografiefehler in dem Bereich der vom Muster begrenzten Materialstrukturen noch während der Herstellung der Struktur selbst bereinigt werden können. Dies geht mit dem Vorteil einher, dass eine Oberflächentopografie mit hervorragenden Eigenschaften beim Dressieren eines Blechs ohne zusätzlichen Prozessschritt hergestellt werden kann, sodass durch die Integration der Nachbehandlung der erzeugten vom Muster begrenzten Strukturen in den herkömmlichen Texturierungsprozess eine verbesserte Topografie der Walze, dadurch auch Topografie der dressierten Bleche, auf sehr wirtschaftliche Weise erhalten wird. Insbesondere können oft erforderliche Superfinish-Verfahren, beispielsweise Schleifoperationen, die aus der Praxis für EDT-Texturierungen bekannt sind, eingespart werden, ohne dass Kompromisse in der erwarteten homogenen gleich großen Formgebung auf der Walze eingegangen werden müssen.
Fig. 1 zeigt eine Prinzipdarstellung der Texturierung einer Dressierwalze mittels gepulsten Lasers;
Figs. 2, 3 und 5 zeigen schematisch dargestellte Flächenabschnitt der Oberflächenstruktur einer Walze, Figs. 2 und 3 gemäß aus der Praxis bekannten Verfahren, Fig. 5 gemäß erfindungsgemäßer Weiterbildung.
Fig. 4 verdeutlicht den Begriff des Pulsabstands.

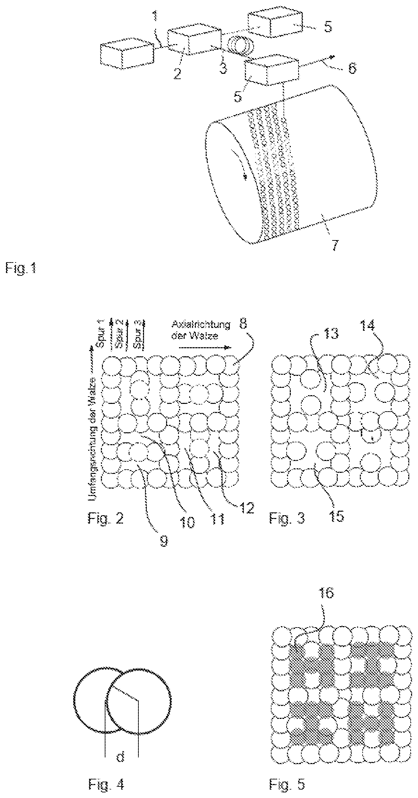

Die erfindungsgemäßen Oberflächenstrukturen mit deterministischer Verteilung der Gestaltsmerkmale (Strukturmerkmale) werden beispielsweise mit einem Walzentexturierverfahren hergestellt, das für den Materialabtrag auf der Oberfläche einer rotierenden Walze einen gepulsten Laser, vorzugsweise einen Kurz-Puls- oder Ultra-Kurz-Puls-Laser verwendet. Hierzu wird die zu gravierende Dressierwalze 7 in einer Drehvorrichtung rotiert. Während die Walze rotiert, wird eine Fokussieroptik 5, die den Laserstrahl auf die Walzenoberfläche fokussiert, mit relativ geringer Geschwindigkeit transversal in Walzenachsrichtung bewegt. Der Laserstrahl beschreibt somit auf der Walzenoberfläche eine helixförmige Bahn, siehe Fig. 1. Durch Wahl der Parameter Pulsfrequenz, Pulsenergie, Abstand der Spuren auf der rotierenden Walzenoberfläche, Laserauftreffpunktdurchmesser (Spotdurchmesser), Laserintensitätsprofile und/oder Drehzahl der Walze wird die Verteilung und die Geometrie der Näpfchen auf der Walzenoberfläche bestimmt. Durch eine Überlappung einzelner Näpfchen werden talförmige, zusammenhängende Bereiche graviert bzw. erzeugt. Die schnelle kontinuierliche Folge der Laserpulse wird gezielt eingestellt, beispielsweise mit einem optischen Schalter 2. Der eingesetzte Laser (Pulsfaserlaser) kann beispielsweise eine maximale mittlere Leistung von 500 W und eine Pulswiederholfrequenz von bis zu 100 kHz bei einer Wellenlänge von ca. 1070 nm aufweisen mit einer Pulsdauer von bis zu 10 µs. Nach Passieren des AOM wird der Laserstrahl 1 mit Hilfe eines Lichtleiterkabels 3 zu der Fokussieroptik 5 geleitet. Der Pfeil 6 bezeichnet die Bewegungsrichtung der Fokussieroptik 5. Die Form der Strukturen wird mit einem eigens dafür vorgesehenen Bildverarbeitungsprogramm gesteuert. Dieses Programm ermöglicht in Abhängigkeit von der Pulsfolgefrequenz, die Walzendrehzahl und die Vorschubgeschwindigkeit der Axialachse der Fokussieroptik 2 zu ermitteln sowie den AOM 10 so anzusteuern, dass die Dichte der Näpfchen und deren deterministische Verteilung entsprechend der Struktur-Design-Vorgaben erzeugt wurden.

In Fig. 2 sind linienförmig aneinandergereihte, sich überlappende Näpfchen 8 gezeigt, die so angeordnet sind, dass sie eine Vielzahl von Doppel-I-förmigen Materialstrukturen in der Walzenoberfläche begrenzen. Des Weiteren sind die Doppel-I-förmigen Materialstrukturen zueinander in Form eines Schachbrettmusters angeordnet, das heißt: Jedes Quadrat von Näpfchenmustern umfasst ein Doppel-I 9, 10, 11, 12, wobei zwei benachbarte Quadrate jeweils zueinander 90 Grad verkippte Doppel-I's umgrenzen. Auf der Walzenoberfläche bilden die überlappenden Näpfchen offene Leervolumina. Bei diesem Verfahren wäre notwendig, für eine hervorragende Typografie nahe der Lasertexturierung noch ein Finish anzuwenden, beispielsweise durch Schleifen und/oder Hartverchromen. Fig. 3 verdeutlicht das Prinzip des H-Musters, für das alle Erläuterungen zu Fig. 2 zutreffen mit der zusätzlichen Maßgabe, dass die in Fig. 2 gestrichelt dargestellten Pulspositionen nicht mit einem Musterpuls beaufschlagt werden, sondern von dem Muster begrenztes Material beinhalten. Statt zweier I's entsteht eine Anzahl von H's 13, 14, 15

Bei dem verbesserten Verfahren werden in den freistehenden Materialstrukturen, also in den vom Muster begrenzten Bereich, ebenfalls Laserpulse aufgebracht. Es wird nämlich die Sequenz von Laserpulsen für die Bildung des wiederholenden Musters nicht an den Positionen der Materialstrukturen, wie in Figs. 2 und 3. dargestellt, gezielt unterbrochen, sondern sie werden in ihrer Pulsenergie verändert derart, dass eine geringere Pulsenergie als die Musterpulsenergie, nämlich die Glättungslaserpulsenergie, für die Bearbeitung der freistehenden Bereiche genutzt wird. Alle Bereiche der von dem Muster begrenzten Materialstrukturen werden mit Glättungslaserpulsen beaufschlagt. Die Beaufschlagung der Glättungslaserpulse erfolgt in den Bereichen, die vom Muster begrenzt werden, was in Fig. 5 anhand der H-förmigen Materialstrukturen der Fig. 3 gezeigt ist. Es ist ersichtlich, dass an allen grau ausgefüllt dargestellten Positionen 16 Glättungslaserpulse eingebracht werden mit einer Glättungslaserpulsenergie, die geringer ist als die Musterpulsenergie.

Anhand Fig. 4 ist der Begriff des Pulsabstands d illustriert, der in Fig. 4 das 1,0-fache des Pulsradius beträgt.

## Patentansprüche

1. Verfahren zur Oberflächentexturierung einer Dressierwalze (7) zum Dressieren eines metallischen Blechs, insbesondere eines Stahlbands, wobei eine Dressierwalze (7) bereitgestellt wird und mittels Laserpulsen (1) eines gepulsten Lasers ein Muster auf der Walzenoberfläche erzeugt wird, wobei eine Sequenz voneinander überlappenden Laserpulsen (1) auf die Walzenoberfläche gerichtet wird zur Erzeugung einer Sequenz von näpfchenförmigen Vertiefungen, die ineinander übergehen, wobei das Richten einer Sequenz von Laserpulsen auf die Walzenoberfläche bedeutet, dass zeitlich aufeinanderfolgende Pulse an veränderten Positionen der Walzenoberfläche räumlich hintereinander auftreffen,
**dadurch gekennzeichnet, dass**:
zwei aufeinanderfolgende einander überlappende Laserpulse einen Pulsabstand (d) aufweisen, der zwischen 0,75 und 1,25 eines Pulsradius beträgt, wobei die Sequenz von Laserpulsen für die Bildung eines sich wiederholenden Musters wiederholt gezielt unterbrochen oder in ihrer Pulsenergie verändert wird.

2. Verfahren nach Anspruch 1, wobei der gepulste Laser ein Kurzpulslaser ist, bevorzugt ein Ultrakurzpulslaser.

3. Verfahren nach Anspruch 1, wobei die Sequenz von Laserpulsen für die Bildung eines sich deterministisch wiederholenden Musters wiederholt gezielt unterbrochen oder in ihrer Pulsenergie verändert wird.

4. Verfahren nach einem der vorhergehenden Ansprüche, wobei zumindest in einem Bereich des Musters, bevorzugt in der gesamten Fläche des Musters, jedes Paar zweier aufeinanderfolgender überlappender Laserpulse einen selben Pulsabstand (d) aufweist.

5. Verfahren nach einem der vorhergehenden Ansprüche, wobei von dem Muster begrenzte Materialstrukturen (9, 10, 11, 12, 13, 14, 15) mit einer Sequenz von Glättungslaserpulsen beaufschlagt wird mit einer Glättungslaserpulsenergie, die geringer ist als eine Musterpulsenergie, das heißt: eine Pulsenergie der Sequenz von Laserpulsen, mit der das Muster erzeugt wird.

6. Verfahren nach Anspruch 5, wobei die Glättungslaserpulsenergie 60 Prozent oder weniger der Musterpulsenergie ist.

7. Verfahren nach einem der Ansprüche 5 oder 6, wobei ein gesamter Dressierbereich der Dressierwalze sequenziell mit überlappenden Pulsen bearbeitet wird, wobei für das Bearbeiten von einem von dem Muster zu begrenzenden Bereich (9, 10, 11, 12, 13, 14, 15) die Glättungspulsenergie eingestellt wird und für das Bearbeiten des Musters die Musterpulsenergie eingestellt wird.

8. Verfahren nach einem der Ansprüche 5 bis 7, wobei ein gesamter Dressierbereich der Dressierwalze (7) während der Bearbeitung vollständig mit einer Sequenz einander überlappender Pulse (8) bearbeitet wird derart, dass innerhalb einer Musterumgrenzung jeder Musterpuls (8) mit mindestens vier, bevorzugt genau vier, Pulsen in Überlapp gebracht wird, die jeweils entweder ein Musterpuls oder ein Glättungspuls sind.

9. Verfahren nach einem der vorhergehenden Ansprüche, wobei die näpfchenförmigen Vertiefungen zwischen 6 µm und 14 µm tief sind.

10. Verfahren nach einem der vorhergehenden Ansprüche, wobei die näpfchenförmigen Vertiefungen zwischen 20 µm und 80 µm Durchmesser aufweisen.

## Claims

1. Method for surface texturing a skin pass mill roll (7) for skin passing a metal sheet, in particular a steel strip, wherein a skin pass mill roll (7) is provided and a pattern is generated on the roll surface by means of laser pulses (1) from a pulsed laser, wherein a sequence of overlapping laser pulses (1) is directed at the roll surface to produce a sequence of cup-shaped depressions that merge into one another, whereby directing a sequence of laser pulses onto the roll surface means that successive pulses strike spatially one after the other at different positions on the roller surface,
**characterized in that**:
two successive overlapping laser pulses have a pulse spacing (d) that is between 0.75 and 1.25 of a pulse radius, wherein the sequence of laser pulses is repeatedly interrupted in a targeted manner or changed in its pulse energy for the formation of a repeating pattern.

2. Method according to claim 1, wherein the pulsed laser is a short-pulse laser, preferably an ultrashort-pulse laser.

3. Method according to claim 1, wherein the sequence of laser pulses for forming a deterministically repeating pattern is repeatedly interrupted in a targeted manner or its pulse energy is changed.

4. Method according to one of the preceding claims, wherein at least in one region of the pattern, preferably across the entire area of the pattern, each pair of two successive overlapping laser pulses has the same pulse spacing (d).

5. Method according to one of the preceding claims, wherein material structures (9, 10, 11, 12, 15, 14, 15) bounded by the pattern with a sequence of smoothing laser pulses having a smoothing laser pulse energy that is lower than a pattern pulse energy, i.e., a pulse energy of the sequence of laser pulses with which the pattern is generated.

6. Method according to claim 5, wherein the smoothing laser pulse energy is 60 percent or less of the pattern pulse energy.

7. Method according to one of claims 5 or 6, wherein an entire skin pass area of the skin pass roll is processed sequentially with overlapping pulses, wherein the smoothing pulse energy is set for processing an area (9, 10, 11, 12, 15, 14, 15) and the pattern pulse energy is set for processing the pattern.

8. Method according to one of claims 5 to 7, wherein an entire skin pass area of the skin pass roll (7) is completely processed during processing with a sequence of overlapping pulses (8) in such a way that within a pattern boundary each pattern pulse (8) is overlapped with at least four, preferably exactly four, pulses, each of which is either a pattern pulse or a smoothing pulse.

9. Method according to one of the preceding claims, wherein the cup-shaped depressions recesses are between 6 in and 14 µm.

10. Method according to one of the preceding claims, wherein the cup-shaped recesses have a diameter of between 20 and 80 µm.

## Revendications

1. Procédé de texturation de surface d'un cylindre de dressage (7) destiné à dresser une tôle métallique, en particulier d'une bande d'acier, dans lequel un cylindre de dressage (7) est fourni et un motif est généré sur la surface du cylindre à l'aide d'impulsions laser (1) d'un laser pulsé, une séquence d'impulsions laser se chevauchant est dirigée vers la surface du cylindre afin de générer une séquence de creux en forme de cuvettes qui se fondent les uns dans les autres, fait de diriger d'une séquence d'impulsions laser sur la surface du cylindre signifie que des impulsions successives dans le temps successives se rencontrent spatialement les unes derrière les autres à des positions modifiées de la surface du cylindre,
**caractérisé en ce que** :
deux les impulsions laser qui se chevauchent ont un espacement d'impulsion (d) compris entre 0,75 et 1,25 fois le rayon d'impulsion, la séquence d'impulsions laser étant interrompue de manière ou modifiée dans son énergie d'impulsion de manière répétée pour former un motif répétitif.

2. Procédé selon la revendication 1, dans lequel le laser pulsé est un laser à impulsions courtes, de préférence un laser à impulsions ultra-courtes.

3. Procédé selon la revendication 1, dans lequel la séquence d'impulsions laser pour la formation d'un motif répétitif de manière déterministe est interrompue de manière répétée et ciblée ou modifiée dans son énergie d'impulsion.

4. Procédé selon l'une des revendications précédentes, dans lequel au moins dans un dans le domaine du motif, de préférence dans toute la surface du motif, chaque paire de deux impulsions laser successives qui se chevauchent présente un même intervalle entre impulsions (d).

5. Procédé selon l'une des revendications précédentes, dans lequel des structures matérielles limitées par le motif (9, 10, 11, 12, 15, 14, 15) sont soumises à une séquence d'impulsions laser de lissage avec une énergie d'impulsion laser de lissage qui est inférieure à une énergie d'impulsion de motif, c'est-à-dire une énergie d'impulsion de la séquence d'impulsions laser avec laquelle le motif est généré.

6. Procédé selon la revendication 5, dans lequel l'énergie des impulsions laser de lissage est inférieure ou égale à 60 % de l'énergie des impulsions du motif.

7. Procédé selon l'une des revendications 5 ou 6, dans lequel toute la zone de dressage du cylindre de dressage est traitée séquentiellement avec des impulsions qui se chevauchent, l'énergie des impulsions de lissage étant réglée pour le traitement d'une zone (9, 10, 11, 12, 15, 14, 15) et l'énergie d'impulsion de lissage est réglée pour le traitement du motif.

8. Procédé selon l'une des revendications 5 à 7, dans lequel une zone de dressage complète du cylindre de dressage (7) est traitée entièrement pendant le traitement avec une séquence d'impulsions se chevauchant (8) de telle sorte que, à l'intérieur d'une délimitation de motif, chaque impulsion de motif (8) est chevauchée par au moins quatre, de préférence exactement quatre, impulsions qui sont chacune soit une impulsion de motif, soit une impulsion de lissage.

9. Procédé selon l'une des revendications précédentes, dans lequel les creux en forme de cuvettes ont une profondeur comprise entre 6 et 14 µm.

10. Procédé selon l'une des revendications précédentes, dans lequel les renfoncements en forme de cuvettes ont un diamètre compris entre 20 et 80 µm.
